# NEUE EUROPÄISCHE PATENTSCHRIFT

(11) **EP 2 628 706 B2**
(45) Veröffentlichungstag und Bekanntmachung des Hinweises auf die Entscheidung über den Einspruch: **01.05.2019**
(45) Hinweis auf die Patenterteilung: 08.04.2015
(21) Anmeldenummer: 13155138.4
(22) Anmeldetag: 13.02.2013
(51) Int. Cl.: B66F 9/24, G06F 17/00

(54) **Gewerbliches Fahrzeug, insbesondere Gabelstapler oder Flurförderzeug, mit einem fahrzeugseitig fest angebrachten Datenspeicher in Zuordnung zu einer parametrierbaren elektronischen Steueranordnung**
Commercial vehicle, in particular forklift or industrial truck, with a fixed, vehicle-mounted data storage device in association with a electronic control device which can be parameterised
Véhicule industriel, en particulier empileuse à fourche ou chariot de manutention, avec une mémoire de données installée fixement côté véhicule dans l'affectation d'un agencement de commande électronique paramétrable

(30) Priorität: 16.02.2012 DE 102012202323
(43) Veröffentlichungstag der Anmeldung: 21.08.2013
(73) Patentinhaber: Jungheinrich Aktiengesellschaft, 22047 Hamburg (DE)
(72) Erfinder: Kammerer, Markus, 85465 Langenpreising (DE); Schade, Ralf, 24576 Bad Bramstedt (DE); Zens, Robert, 85368 Moosburg (DE); Ries, Michael, 63743 Aschaffenburg (DE)
(74) Vertreter: Weickmann & Weickmann PartmbB

(56) Entgegenhaltungen:
- DE-A1- 3 807 999
- DE-A1-102006 010 640
- US-A- 4 491 918
- US-A- 5 113 344
- US-A- 6 061 617
- US-A- 6 061 617
- US-A1- 2011 197 009

## Beschreibung

Die Erfindung betrifft nach einem ersten Aspekt ein gewerbliches Fahrzeug, insbesondere Gabelstapler oder Flurförderzeug, umfassend eine wenigstens einen Antriebsmotor umfassende Funktionsanordnung zur Bereitstellung wenigstens einer Arbeits- oder Betriebsfunktion einschließlich einer Fahrfunktion; und umfassend eine parametrierbare elektronische Steueranordnung, die dafür ausgeführt oder programmiert ist, die Funktionsanordnung in Abhängigkeit von einem in der Steueranordnung abgelegten Parameterdatensatz in Bezug auf ein Einschalten oder Abschalten der Arbeits- oder Betriebsfunktion oder einer jeweilige Arbeits- oder Betriebsfunktion oder/und in Bezug auf eine Art und Weise der Durchführung der Arbeits- oder Betriebsfunktion oder einer jeweilige Arbeits- oder Betriebsfunktion anzusteuern.

Das Verhalten aktueller gewerblicher Fahrzeuge, speziell auch aktueller Gabelstapler und Flurförderzeuge, wird in der Regel weitgehend durch parametrierbare Steuersoftware beeinflusst, die in einer elektronischen Steueranordnung läuft. Einen Teil dieser Parameter ist bedeutsam für sicherheitsrelevante Funktionen, um diese zu beeinflussen, freizugeben bzw. zu sperren und die Steuersoftware an alternativ verbaubare, gegebenenfalls auch weglassbare Hardware anzupassen.

Es kann vorkommen, dass im Servicefall, etwa im Rahmen einer Wartung oder Reparatur eine momentan im gewerblichen Fahrzeug verbaute elektronische Steueranordnung ausgetauscht werden muss. Der Servicetechniker muss dann herkömmlich die für das betreffende Fahrzeug gültigen Parameterdaten in die Austausch-Steueranordnung einprogrammieren, was aufwendig und fehleranfällig ist.

Die US 5,133,344 A zeigt ein gewerbliches Fahrzeug, insbesondere einen Gabelstapler, nach dem Oberbegriff von Anspruch 1. Dort ist der Datenspeicher (ID-Tag) am Chassis des Fahrzeugs oder am Armaturenbrett permanent und fest angebracht.

Es stellt sich insoweit die Aufgabe, die Parametrisierung der im Fahrzeug neu eingebauten elektronischen Steueranordnung zu erleichtern und weniger fehleranfällig zu machen.

Eine weitere Aufgabe ist die Sicherstellung der Parameterintegrität und Parameterkompatibilität im Falle eines Steuerungstausches, der gegebenenfalls auch durch einen Benutzer anstelle des eigentlich zuständigen Servicetechnikers durchgeführt werden könnte.

Eine weitere Aufgabe ist die Bereitstellung einer einfachen und zuverlässigen Möglichkeit, einen momentan gültigen Parameterdatensatz für eine spätere Verwendung etwa nach einem Austausch der elektronischen Steueranordnung zu sichern.

Zur Lösung oder als Lösungsgrundlage für die Lösung wenigstens einer der genannten Aufgaben wird ein gewerbliches Fahrzeug nach Anspruch 1 vorgeschlagen.

Der Datenspeicher ist erfindungsgemäß fest im Fahrzeug angebracht, also nicht einfach aus dem Fahrzeug entfernbar bzw. durch einen anderen Datenspeicher ersetzbar. Der Datenspeicher ist also unverlierbar in das Fahrzeug integriert, nämlich in einem nur mit sehr großen Aufwand aus dem Fahrzeug entfernbaren bzw. austauschbaren Kabelbaum.

Der Datenspeicher kann dafür dienen, wesentliche Fahrzeugdaten zu speichern, vorzugsweise zur Gewährleistung einer Datenintegrität oder nur zur Unterbindung von Manipulationen geschützt zu speichern, wofür übliche Sicherungsverfahren wie Verschlüsselung und Schützen durch eine Prüfsumme zum Einsatz kommen können. In diesem Datenspeicher können wesentliche Fahrzeugdaten, wie etwa die Fahrzeug-Seriennummer, relevante Parameter für die Funktionsanordnung, die Ausstattung des Fahrzeugs mit Funktionskomponenten kennzeichnende Parameterdaten und so weiter, abgespeichert sein, bzw. abgespeichert werden bzw. von der Steueranordnung lesbar sein.

Hierbei wird daran gedacht, dass die Steueranordnung in einem Selbsttest die Integrität des in ihr selbst abgelegten Parameterdatensatzes, der wesentliche Fahrzeugdaten wie die Fahrzeug-Seriennummer und relevante Parameter enthält, überprüft und auch die Integrität der Daten im gegenüber der Steueranordnung gesonderten Datenspeicher überprüft und einen Abgleich zwischen dem Parameterdatensatz und dem fahrzeugrelevanten Datensatz des Datenspeichers durchführt.

Im Falle von fehlerhaften oder von einander abweichenden bzw. nicht zu einander passenden Daten können entsprechende Fahrzeugreaktionen vordefiniert sein, die die Steueranordnung dann auslösen kann. So bietet es sich an, das die Steueranordnung akustische oder/und optische Fehlermeldungen ausgibt. Ferner können sicherheitsrelevante Funktionen, speziell Arbeits- bzw. Betriebsfunktionen der Funktionsanordnung, gesperrt oder beschränkt werden.

Der erfindungsgemäße Datenspeicher ermöglicht es ferner, dass ein Servicetechniker nach einem Austausch der Steueranordnung im Wege eines automatisierten Daten-Downloads aus dem Datenspeicher die neue Steueranordnung schnell und sicher auf den ursprünglichen Zustand des gewerblichen Fahrzeugs wieder herzustellen.

Neben der Sicherstellung der Integrität und Kompatibilität von relevanten, insbesondere sicherheitsrelevanten Parameterdaten ermöglicht der erfindungsgemäße Datenspeicher auch ein wahlweises Freischalten von Arbeits- oder Betriebsfunktionen, die an ein bestimmtes, über die Fahrzeug-Seriennummer identifiziertes Fahrzeug gekoppelt sind. Es lassen sich so Funktionen des gewerblichen Fahrzeugs als kostenpflichtige Zusatzfunktionen anbieten.

Zumindest implizit wurde schon die Möglichkeit angesprochen, dass die Steueranordnung oder wenigstens ein Steueranordnungsmodul derselben unabhängig von dem Datenspeicher aus dem Fahrzeug ausbaubar und durch eine Austausch-Steueranordnung bzw. ein Austausch-Steueranordnungsmodul ersetzbar ist. Es wird so erreicht, dass bestimmte Einstellungen und Parameter des Fahrzeugs nicht nur auf dem im Service austauschbaren, die Steueranordnung bildenden Bauteil abgelegt sind und mit dem Ausbau dieses Bauteils gewissermaßen "verschwinden", sondern bei einem Steuerungsaustausch erhalten bleiben, sowohl im Austausch gegen ein Ersatzteil als auch im Falle eines "Kreuztausches" zwischen mehreren gewerblichen Fahrzeugen. Der Aufwand beim Austausch wird damit reduziert und mögliche Fehler bis hin zu sicherheitskritischen Fehlparametrierungen können vermieden werden. Der zeitliche Aufwand und dementsprechend auch die Servicekosten werden bei gleichzeitiger Erhöhung der Qualität und Sicherheit reduziert.

Aus den vorstehenden Erwägungen ergibt sich, dass die in dem Datenspeicher abgespeicherten fahrzeugrelevanten Daten den Parameterdatensatz oder einen Teilsatz des Parameterdatensatzes umfassen können.

Man kann durchaus daran denken, dass die Steueranordnung oder/und der Datenspeicher dafür ausgeführt ist, dass die Steueranordnung nur lesend aber nicht schreibend auf den Datenspeicher zugreifen kann. Es könnten dann im Datenspeicher Daten abgespeichert werden, die das Fahrzeug eindeutig identifizieren, wie die Fahrzeug-Seriennummer, und die die Hardware-Ausstattung des Fahrzeugs angeben. Im Falle einer Änderung der Hardware-Ausstattung müsste dann gegebenenfalls der Datenspeicher ausgetauscht oder durch gegenüber dem Fahrzeug externe technische Mittel neu programmiert werden. Nicht autorisierte Manipulation lassen sich so sehr zuverlässig verhindern.

Eine andere Möglichkeit ist, dass die Steueranordnung oder/und der Datenspeicher dafür ausgeführt ist, dass die Steueranordnung nur lesend aber nicht schreibend auf einen ersten Speicherabschnitt des Datenspeichers zugreifen kann und lesend und schreibend auf einen zweiten Speicherabschnitt des Datenspeichers zugreifen kann. Durch diesen Weiterbildungsansatz lassen sich Daten wie die Seriennummer des Fahrzeugs im ersten Speicherabschnitt abspeichern und Daten wie etwa wahlweise zum Einsatz kommende Parameter im zweiten Speicherabschnitt abspeichern.

Eine derartige Ausführung des Datenspeichers mit einem ersten und einem zweiten Speicherabschnitt der angegebenen Art ist aber nicht zwingend. Entsprechende Sicherheit gegen Manipulation lässt sich auch durch Anwendung von Verschlüsselungen und dergleichen erreichen.

Allgemein wird daran gedacht, dass der Datenspeicher oder der zweite Speicherabschnitt als elektrisch löschbarer programmierbarer Speicher (EEPROM) ausgeführt ist bzw. das der Datenspeicher oder der erste Speicherabschnitt als Nur-Lese-Speicher (ROM) oder als löschbarer programmierbarer Nur-Lese-Speicher (EPROM) ausgeführt ist.

Für die Bereitstellung der Datenverbindung zwischen dem Datenspeicher und der elektronischen Steueranordnung kommen im Prinzip beliebige Datenverbindungen in Betracht, wie etwa ein digitaler Datenbus oder Feldbus. Bevorzugt ist eine Datenverbindung, die fest in dem Fahrzeug installiert ist. Beispielsweise kann die Datenverbindung wenigstens eine fest in dem Fahrzeug installierte elektrische Datenleitung umfassen. Vorzugsweise ist die Datenverbindung von einem seriellen Zweidraht-Bus, beispielsweise einem synchronen seriellen Zweidraht-Bus, oder - höchstvorzugsweise - von einem seriellen Eindraht-Bus gebildet. Geeignet als Zweidraht-Bus ist beispielsweise der sogenannte I²C- oder TWI-Bus.

Wie schon angesprochen, ist die Steueranordnung dafür ausgeführt oder programmiert, Daten aus dem Datenspeicher auszulesen und mit Daten des in der Steueranordnung abgelegten Parameterdatensatzes gemäß wenigstens einer ersten Überprüfungsbedingung zu überprüfen, und auf eine Nichterfüllung der Überprüfungsbedingung anzusprechen durch Auslösen wenigstens einer Folgefunktion oder/und durch Sperren oder Einschränken wenigsten einer Arbeits- oder Betriebsfunktion der Funktionsanordnung.

Ein solches Auslesen und Überprüfen kann beispielsweise nach jedem Neustart oder Rücksetzen der Steueranordnung bzw. des Fahrzeugs erfolgen, oder/und wenn eine bestimmte Arbeits- und Betriebsfunktion ausgeführt werden soll. Eine geeignete Folgefunktion kann ein Hinweis oder eine Warnung sein, akustisch oder/und optisch, wenn die Überprüfungsbedingung nicht erfüllt ist.

Weiterhin wird vorgeschlagen, dass die Steueranordnung dafür ausgeführt oder programmiert ist, Daten aus dem Datenspeicher auszulesen und mit Daten des in der Steueranordnung abgelegten Parameterdatensatzes gemäß wenigstens einer zweiten Überprüfungsbedingung zu überprüfen, und auf eine Erfüllung der Überprüfungsbedingung anzusprechen durch Freigeben oder Aufheben einer Einschränkung wenigsten einer Arbeits- oder Betriebsfunktion der Funktionsanordnung. Es wird hier beispielsweise an Wahlfunktionen gedacht, die von der Steueranordnung bzw. dem in der Steueranordnung laufenden Programm nur dann ausgeführt werden sollen, wenn diese für das betreffende Fahrzeug freigegeben ist.

Die Erfindung stellt nach einem zweiten Aspekt ferner ein Verfahren zur Parametrierung einer Steueranordnung im Bezug auf eine erfindungsgemäßes Fahrzeug bereit. Bei diesem Verfahren werden aus dem im Fahrzeug fest angebrachten Datenspeicher Daten ausgelesen und als Parameterdaten eines Parameterdatensatzes in der Steueranordnung des Fahrzeugs abgelegt.

Ferner stellt die Erfindung nach einem dritten Aspekt ein Verfahren zur Sicherstellung einer Parameterintegrität oder/und Parameterkompatibilität eines in einer Steueranordnung abgelegten Parameterdatensatzes in Bezug auf ein erfindungsgemäßes Fahrzeug bereit. Bei dem Verfahren werden aus dem im Fahrzeug fest angebrachten Datenspeicher Daten ausgelesen und mit Parameterdaten eines in der Steueranordnung abgelegten Parameterdatensatzes verglichen. Die aus dem Datenspeicher ausgelesenen oder/und die Parameterdaten des Parameterdatensatzes werden vorzugsweise auf Datenintegrität überprüft, höchst vorzugsweise vor dem Vergleich.

Die Erfindung wird im Folgenden ohne Beschreibung der Allgemeinheit anhand eines sich auf einen Gabelstapler beziehenden Ausführungsbeispiels erläutert.

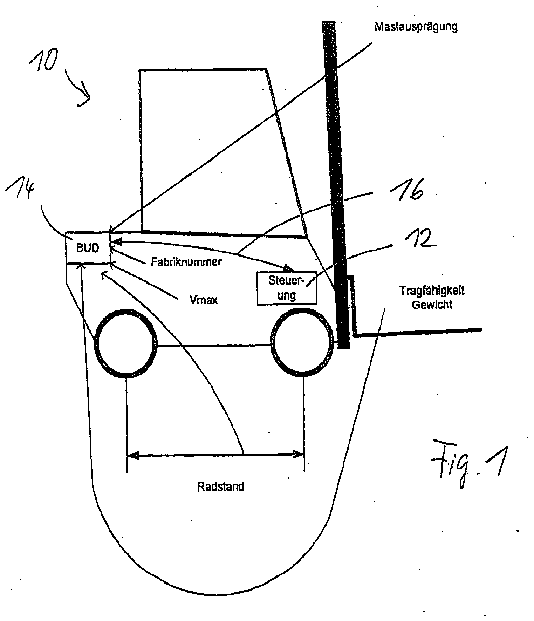

Die einzige Figur (Figur 1) zeigt schematisch einen Gabelstapler 10 mit einer auch kurz als "Steuerung" bezeichneten elektronischen Steueranordnung 12 und einem gesondert von der Steuerung angeordneten, als "BUD" (Back-up-Dongle) bezeichneten, im Fahrzeug festangebrachten Datenspeicher 14, die über eine fest im Fahrzeug installierte Datenverbindung 16 verbunden sind.

Bei dem Datenspeicher oder BUD 14 handelt es sich zweckmäßig um ein sogenanntes "Zweidraht-EEPROM", welches bevorzugt so im Fahrzeug angebracht bzw. integriert ist, dass es nicht oder nur mit sehr großem Aufwand entfernbar bzw. austauschbar ist. Erfindungsgemäß ist der Datenspeicher im Kabelbaum des Gabelstaplers eingebaut, da der Kabelbaum in der Regel als quasi-rahmenfest angesehen werden kann, aufgrund des sehr großen Aufwands einen Kabelbaum auszutauschen.

Die Datenverbindung 16 kann zweckmäßig als Zweidraht-Bus nach der I²C-Busspezifikation ausgeführt sein, der von Philips Semiconductors (heute NXP Semiconductors) als einfacher serieller bidirektionaler Zweidraht-Bus für effiziente Interchip-Verbindungen entwickelt wurde. Dieser Bus ist auch als Inter-IC-Bus oder TWI-Bus (TWI: two wire interface) bekannt.

Im Datenspeicher oder BUD 14 sind bzw. werden für den Betrieb wichtige oder gar notwendige Daten abgelegt, die etwa die Fahrzeugbaureihe einschließlich beispielsweise Fahrzeuggewicht, Radstand und dergleichen angeben, die etwa die individuelle Ausprägung des Fahrzeugs hinsichtlich optionaler Ausstattung, etwa verbauter Mast des Gabelstaplers und Ähnliches angeben, die gegebenenfalls Limitierungen geben, beispielsweise ein einzuhaltendes Geschwindigkeitslimit, wenn dieses kleiner als die maximal zulässige oder maximal mögliche Geschwindigkeit ist, Tragfähigkeit (maximal zulässiges Traggewicht) des Mastes und Ähnliches. Ferner kann der Datenspeicher oder BUD allgemeine Daten, insbesondere genannte "rahmenfeste Daten" enthalten, wie beispielsweise eine Fahrzeugnummer oder Seriennummer und eine Fabriknummer.

Diese Daten können von vornherein mit der Auslieferung des Fahrzeugs bzw. Gabelstaplers in dem BUD bzw. Datenspeicher 14 abgespeichert sein. Es ist auch denkbar, aber weniger bevorzugt, dass solche Daten durch die Steuerung 12 in dem BUD 14 abgespeichert werden.

Ferner kommt es in Betracht, dass in dem Datenspeicher bzw. BUD 14 weitere, eine momentane Konfiguration des Fahrzeugs, etwa eine momentane Konfiguration des Hubmastes des Gabelstaplers, angebende Daten abgespeichert werden, wofür die Steuerung 12 ein entsprechende Abspeicherfunktionalität aufweisen kann. Es ist aber nicht zwingend, dass alle für den Betrieb des Fahrzeugs bzw. dessen Funktionsanordnung relevanten Parameter, die die Steuerung 12 in einem internen Speicher oder in internen Registern hält, im Datenspeicher bzw. BUD 14 abgelegt werden bzw. abgelegt werden können, je nach Speichergröße des Datenspeichers 14. Es sollten aber alle Parameter im Datenspeicher bzw. BUD 14 abgespeichert sein, ohne die das Fahrzeug nicht oder nicht sicher zu betreiben ist.

Gemäß einer bevorzugten Ausgestaltung weist die Steuerung 12 überhaupt keine Schreibfunktionalität in Bezug auf den Datenspeicher 14 auf, sondern nur eine Lesefunktionalität. Alle im Datenspeicher abzuspeichernden Daten werden dann fabrikseitig, gegebenenfalls auch durch einen Servicetechniker mittels einer gegenüber dem Fahrzeug externen Konfigurationseinrichtung, in dem Datenspeicher 14 abgelegt. Sollte die Steuerung 12 auch eine Schreib- bzw. Abspeicherfunktionalität in Bezug auf den Datenspeicher 14 aufweisen, so können bestimmte Daten des Datenspeichers durch kryptografische Methoden gegen unautorisierte Veränderungen gesichert sein. Es kommt auch in Betracht, den Datenspeicher mit einem ersten Speicherabschnitt, auf den die Steuerung 12 nur lesend aber nicht schreiben zugreifen kann und mit einem zweiten Speicherabschnitt, auf den die Steuerung 16 sowohl lesend als auch schreibend zugreifen kann, auszuführen.

Wird das Fahrzeug bzw. der Gabelstapler 10 umkonfiguriert, beispielsweise der Gabelstaplermast ausgetauscht, so müssen auch die entsprechenden Daten im Datenspeicher bzw. BUD 14 modifiziert werden. Bevorzugt erfolgt eine solche Umprogrammierung zusammen mit der entsprechenden Reparametrisierung der Steuerung 12, so dass die internen Daten der Steuerung 12 einerseits und die im Datenspeicher bzw. BUD 14 abgespeicherten Daten andererseits immer konsistent miteinander sind.

Die Steuerung 12 ist vorzugsweise dafür ausgeführt, bzw. konfiguriert, nach einem Reset oder Neustart (z.B. beim sogenannten "Power-Up") fahrzeugrelevante Daten aus dem Datenspeicher bzw. BUD 14 auszulesen und mit den entsprechenden in der Steuerung selbst abgelegten Daten zu vergleichen, sofern die Steuerung selbst schon parametriert wurde. Es sind unterschiedliche Fälle unterscheidbar, beispielsweise zumindest die Folgenden:
1.: Die Steuerung 12 wurde noch nicht parametriert, enthält also nicht entsprechende Daten in einem internen Speicher oder in internen Registern der Steuerung, weil sie beispielsweise eine neu eingebaute Austausch-Steuerung ist, also zum ersten Mal im Fahrzeugverbund gestartet wird. In diesem Falle kann die Steuerung die in dem Datenspeicher bzw. BUD 14 abgelegten Daten auslesen und in den internen Datenspeicher bzw. in dem internen Registern der Steuerung ablegen, wodurch die notwendige Parametrierung der Steuerung vollständig oder zumindest zu wichtigen Teilen bewerkstelligt ist, ohne das manueller und fehlerträchtiger Aufwand durch einen Servicetechniker entstanden ist. Beim nächsten Reset bzw. Power-Up werden die so in der Steuerung abgelegten Daten mit aus dem BUD bzw. Datenspeicher 14 ausgelesenen Daten verglichen.
2.: Die Steuerung 12 wurde schon parametriert, enthält also den notwendigen Parameterdatensatz. Der nach dem Reset bzw. Power-Up durchgeführte Datenvergleich mit den aus dem Datenspeicher bzw. BUD 14 ausgelesenen Daten sollte dann zu dem Ergebnis führen, dass die steuerungsseitigen und die datenspeicherseitigen Daten miteinander konsistent sind, so dass der normale Betrieb des gewerblichen Fahrzeugs mit den vorgesehenen Arbeits- und Betriebsfunktionen ohne Einschränkungen freigegeben werden kann. Mangelnde Konsistenz zwischen den Daten sowie auch eine mangelnde Datenintegrität der datenspeicherseitigen Daten einerseits oder/und der datenspeicherseitigen Daten andererseits können auf ein bestehendes Problem hinweisen, so dass dann zweckmäßig ein Warnsignal oder eine Warnmeldung ausgegeben werden könnte. Die Datenintegrität des jeweiligen Datensatzes kann durch übliche Prüfsummenverfahren gesichert und von der Steuerung überprüfbar sein.
3.: Die Steuerung 12 wurde schon parametriert, gehört aber nicht zu dem Fahrzeug, in dem sie jetzt eingebaut ist. Dies kann die Steuerung auf Basis der im Datenspeicher bzw. BUD 14 abgespeicherten, das Fahrzeug identifizierenden Daten (insbesondere Fahrzeug- oder Seriennummer) erkennen und beispielsweise aus einem Kreuztausch der Steuerung mit einem anderen Fahrzeug resultieren. In diesem Falle kann vorgesehen sein, dass die Steuerung die im Datenspeicher abgelegten Parameter zum Betrieb des Fahrzeugs hinsichtlich der vorgesehenen Arbeits- oder Betriebsfunktionen benutzt, gegebenenfalls aber mit gewissen Funktionseinschränkungen aus Sicherheitsgründen. Die Steueranordnung 12 sollte dann eine Warnung oder Hinweis an den Benutzer ausgeben, dass die Steuerung und das Fahrzeug nicht zusammenpassen. Eine automatische Neu-Parametrierung der Steueranordnung ist denkbar, aus Sicherheitsgründen aber nicht bevorzugt. Wird die Steuerung dann in das ursprüngliche Fahrzeug zurückgebaut, liegt dann die Situation gemäß dem zweiten Fall wieder vor und der normale Betrieb des Fahrzeug mit den vorgesehenen Arbeits- oder Betriebsfunktionen ist ohne Einschränkungen möglich. Sollte die zuvor mit einem anderen Fahrzeug benutzte Steuerung in dem neuen Fahrzeug verbleiben, muss die Steuerung gemäß der bevorzugten Ausgestaltung neu parametriert werden, was vorzugsweise nur einem Servicetechniker mit einer entsprechenden technischen Ausrüstung möglich ist.

Das erfindungsgemäße Vorsehen eines gegenüber der Steuerung gesonderten, fest im Fahrzeug angebrachten Datenspeichers ermöglicht es, gewisse, sich technisch eigentlich nur als Software-Funktionalitäten darstellende Betriebs- und Arbeitsfunktionen als gesondert zu bezahlende Ausstattungsoptionen anzubieten, die über die im Datenspeicher bzw. BUD 14 abgelegt Fahrzeug-Seriennummer (oder ähnliche, eindeutig das Fahrzeug identifizierende Daten) eindeutig und identifizierbar an ein bestimmtes Fahrzeug gekoppelt werden. Dies ist nicht nur aus kaufmännischer Sicht vorteilhaft, sondern auch zur Erhöhung der Betriebs- und Arbeitssicherheit, da es sich um Funktionen handeln kann, die nicht bei jeder Fahrzeugvariante bzw. Fahrzeugausstattung zulässig sind.

Anstelle eines sogenannten "Zweidraht-EEPROM" und einer als Zweidraht-Bus nach der I²C-Bus Spezifikation ausgeführten Datenverbindung 16 kann vorteilhaft auch ein Datenspeicher, insbesondere EEPROM, und eine Datenverbindung nach der sogenannten "1-wire"-Technologie verwendet werden. Nach der "Zweidraht"-Technik, wie dem I²C-Bus, werden zur Versorgung des EEPROMs zusätzlich zu den beiden Kommunikationsleitungen noch zwei Leitungen zur Energieversorgung benötigt, so dass sich insgesamt eine 4-adrige Verbindung zwischen dem BUD 14 und der Steuerung 12 ergibt. Bei dem "1-wire" bzw. "one-wire" oder "1-Draht Bus" wird eine einzige Datenader (DQ) sowohl zur Stromversorgung als auch zur seriellen bidirektionalen Datenkommunikation verwendet, neben der Masse(GND)-Verbindung zum Schließen des Stromkreises. Mit dieser Technologie lässt sich also eine aufwandsminimierte, zwei-adrige Lösung realisieren, wobei durchaus sogar die ohnehin vorhandene GND-Leitung im Kabelbaum des Fahrzeugs für die Energieversorgung des "1-wire"-EEPROMs mit verwendet werden könnte. Der "1-wire"-Bus ist auch insofern vorteilhaft, als das mehrere parallel angeschlossene Speicherbausteine unterstützt werden, was zur Erhöhung der Speicherkapazität oder der Verfügbarkeit sinnvoll genutzt werden könnte.

## Patentansprüche

1. Gewerbliches Fahrzeug, insbesondere Gabelstapler (10) oder Flurförderzeug, umfassend:
- eine wenigstens einen Antriebsmotor umfassende Funktionsanordnung zur Bereitstellung wenigstens einer Arbeits- oder Betriebsfunktion einschließlich einer Fahrfunktion;
- eine parametrierbare elektronische Steueranordnung (12), die dafür ausgeführt oder programmiert ist, die Funktionsanordnung in Abhängigkeit von einem in der Steueranordnung abgelegten Parameterdatensatz in Bezug auf ein Einschalten oder Abschalten der Arbeits- oder Betriebsfunktion oder einer jeweiligen Arbeits- oder Betriebsfunktion oder/und in Bezug auf eine Art und Weise der Durchführung der Arbeits- oder Betriebsfunktion oder einer jeweiligen Arbeits- oder Betriebsfunktion anzusteuern; und
einen gegenüber der Steueranordnung gesonderten, im Fahrzeug fest angebrachten Datenspeicher (14), in dem wenigsten ein fahrzeugrelevanter Datensatz abgespeichert oder abspeicherbar ist, wobei die Steueranordnung dafür ausgeführt ist, in einem Lesezugriff über eine Datenverbindung (16) Daten des fahrzeugrelevanten Datensatzes aus dem Datenspeicher (14) auszulesen oder/und in einem Schreibzugriff in den Datenspeicher (14) Daten zur Aufnahme in den fahrzeugrelevanten Datensatz oder zur Aktualisierung des fahrzeugrelevanten Datensatzes zu schreiben,
**dadurch gekennzeichnet, dass** der Datenspeicher (14) fest in einem Kabelbaum des Fahrzeugs eingebaut ist; und
die Steueranordnung (12) dafür ausgeführt oder programmiert ist, Daten aus dem Datenspeicher (14) auszulesen und mit Daten des in der Steueranordnung (12) abgelegten Parameterdatensatzes gemäß wenigstens einer ersten Überprüfungsbedingung zu überprüfen, und auf eine Nichterfüllung der Überprüfungsbedingung anzusprechen durch Auslösen wenigstens einer Folgefunktion oder/und durch Sperren oder Einschränken wenigstens einer Arbeits- oder Betriebsfunktion der Funktionsanordnung.

2. Fahrzeug nach Anspruch 1, **dadurch gekennzeichnet, dass** die Steueranordnung (12) oder wenigstens ein Steueranordnungsmodul derselben unabhängig von dem Datenspeicher (14) aus dem Fahrzeug ausbaubar und durch eine Austausch-Steueranordnung bzw. ein Austausch-Steueranordnungsmodul ersetzbar ist.

3. Fahrzeug nach Anspruch 1 oder 2, **dadurch gekennzeichnet, dass** die in dem Datenspeicher (14) abgespeicherten fahrzeugrelevanten Daten den Parameterdatensatz oder einen Teildatensatz des Parameterdatensatzes umfassen.

4. Fahrzeug nach einem der Ansprüche 1 bis 3, **dadurch gekennzeichnet, dass** die Steueranordnung (12) oder/und der Datenspeicher (14) dafür ausgeführt ist, dass die Steueranordnung nur lesend aber nicht schreibend auf den Datenspeicher zugreifen kann.

5. Fahrzeug nach einem der Ansprüche 1 bis 3, **dadurch gekennzeichnet, dass** die Steueranordnung (12) oder/und der Datenspeicher (14) dafür ausgeführt ist, dass die Steueranordnung nur lesend aber nicht schreibend auf einen ersten Speicherabschnitt des Datenspeichers zugreifen kann und lesend und schreibend auf einen zweiten Speicherabschnitt des Datenspeichers zugreifen kann.

6. Fahrzeug nach einem der Ansprüche 1 bis 5, **dadurch kennzeichnet, dass** der Datenspeicher (14) oder der zweite Speicherabschnitt als elektrisch löschbarer programmierbarer Speicher (EEPROM) ausgeführt ist bzw. das der Datenspeicher (14) oder der erste Speicherabschnitt als Nur-Lese-Speicher (ROM) oder als löschbarer programmierbarer Nur-Lese-Speicher (EPROM) ausgeführt ist.

7. Fahrzeug nach einem der Ansprüche 1 bis 6, **dadurch gekennzeichnet, dass** die Datenverbindung (16) wenigstens eine fest in dem Fahrzeug installierte elektrische Datenleitung umfasst, wobei die Datenverbindung vorzugsweise von einem seriellen Zweidraht-Bus, insbesondere einem synchronen seriellen Zweidraht-Bus, beispielsweise dem sogenannten I²C- oder TWI-Bus, oder - höchstvorzugsweise - von einem seriellen Eindraht-Bus gebildet ist.

8. Fahrzeug nach einem der Ansprüche 1 bis 7, **dadurch gekennzeichnet, dass** dass die Steueranordnung (12) dafür ausgeführt oder programmiert ist, Daten aus dem Datenspeicher (14) auszulesen und mit Daten des in der Steueranordnung abgelegten Parameterdatensatzes gemäß wenigstens einer zweiten Überprüfungsbedingung zu überprüfen, und auf eine Erfüllung der Überprüfungsbedingung anzusprechen durch Freigeben oder Aufheben einer Einschränkung wenigsten einer Arbeits- oder Betriebsfunktion der Funktionsanordnung.

9. Verfahren zur Parametrierung einer Steueranordnung in Bezug auf ein Fahrzeug nach einem der Ansprüche 1 bis 8, **dadurch gekennzeichnet, dass** aus dem im Fahrzeug fest angebrachten Datenspeicher (14) Daten ausgelesen und als Parameterdaten eines Parameterdatensatzes in der Steueranordnung (12) abgelegt werden.

10. Verfahren zur Sicherstellung einer Parameterintegrität oder/und Parameterkompatibilität eines in einer Steueranordnung (12) abgelegten Parameterdatensatzes in Bezug auf ein Fahrzeug nach einem der Ansprüche 1 bis 8, **dadurch gekennzeichnet, dass** aus dem im Fahrzeug fest angebrachten Datenspeicher (14) Daten ausgelesen und mit Parameterdaten eines in der Steueranordnung (12) abgelegten Parameterdatensatzes verglichen werden.

11. Verfahren nach Anspruch 10, **dadurch gekennzeichnet, dass** die aus dem Datenspeicher (14) ausgelesen Daten oder/und die Parameterdaten des Parameterdatensatzes auf Datenintegrität überprüft werden.

## Claims

1. Commercial vehicle, in particular fork-lift truck (10) or industrial truck, comprising:
- a functional arrangement comprising at least one drive motor for providing at least one working or operating function including a travelling function;
- a parameterizable electronic control arrangement (12), which is configured or programmed to control the functional arrangement depending on a parameter dataset stored in the control arrangement in relation to switching on or off the working or operating function or a respective working or operating function and/or in relation to a type of implementation of the working or operating function or a respective working or operating function; and
a data memory (14), which is rigidly attached in the vehicle, separate with respect to the control arrangement and in which at least one dataset relevant to the vehicle is stored or can be stored, the control arrangement being configured to read out data of the dataset relevant to the vehicle from the data memory (14) in a read access via a data connection (16) and/or, in a write access, to write data to the data memory (14) for recording in the dataset relevant to the vehicle or to update the dataset relevant to the vehicle, **characterized in that** the data memory (14) is rigidly installed in a cable harness of the vehicle; and
**in that** the control arrangement (12) is configured or programmed to read out data from the data memory (14) and to check said data using data of the parameter dataset stored in the control arrangement (12) according to at least a first checking condition, and to respond to non-fulfilment of the checking condition by triggering at least one follow-up function and/or by blocking or limiting at least one working or operating function of the functional arrangement.

2. Vehicle according to claim 1, **characterized in that** the control arrangement (12), or at least one control arrangement module thereof, can be removed from the vehicle independently of the data memory (14) and can be replaced by an exchange control arrangement or an exchange control arrangement module.

3. Vehicle according to claim 1 or 2, **characterized in that** the data relevant to the vehicle stored in the data memory (14) comprise the parameter dataset or a part data set of the parameter dataset.

4. Vehicle according to any one of claims 1 to 3, **characterized in that** the control arrangement (12) and/or the data memory (14) is configured for the control arrangement to be able to access the data memory only for reading but not writing.

5. Vehicle according to any one of claims 1 to 3, **characterized in that** the control arrangement (12) and/or the data memory (14) is configured for the control arrangement to be able to access a first memory portion of the data memory only for reading but not writing and to be able to access a second memory portion of the data memory for reading and writing.

6. Vehicle according to any one of claims 1 to 5, **characterized in that** the data memory (14) or the second memory portion is configured as an electrically erasable programmable read-only memory (EEPROM) or **in that** the data memory (14) or the first memory portion is configured as a read-only memory (ROM) or as an erasable programmable read-only memory (EPROM).

7. Vehicle according to any one of claims 1 to 6, **characterized in that** the data connection (16) comprises at least one electric data line rigidly installed in the vehicle, the data connection preferably being formed by a serial two-wire bus, in particular a synchronous serial two-wire bus, for example the so-called I²C bus or TWI bus or - most preferably - by a serial one-wire bus.

8. Vehicle according to any one of claims 1 to 7, **characterized in that** the control arrangement (12) is configured or programmed to read out data from the data memory (14) and to check said data using data of the parameter dataset stored in the control arrangement according to at least a second checking condition, and to respond to a fulfilment of the checking condition by clearing or deleting a limitation of at least one working or operating function of the functional arrangement.

9. Method for parameterizing a control arrangement in relation to a vehicle according to any one of claims 1 to 8, **characterized in that** data are read out from the data memory (14) rigidly attached in the vehicle and stored in the control arrangement (12) as parameter data of a parameter dataset.

10. Method for ensuring a parameter integrity and/or parameter compatibility of a parameter dataset stored in a control arrangement (12) in relation to a vehicle according to any one of claims 1 to 8, **characterized in that** data are read out from the data memory (14) rigidly attached in the vehicle and are compared with parameter data of a parameter dataset stored in the control arrangement (12).

11. Method according to claim 10, **characterized in that** the data read out from the data memory (14) and/or the parameter data of the parameter dataset are checked for data integrity.

## Revendications

1. Un véhicule commercial, en particulier un chariot élévateur à fourche (10) ou un chariot de manutention, comprenant:
- un arrangement fonctionnel comprenant au moins un moteur d'entraînement pour mettre à la disposition au moins une fonction de travail ou d'opération, y compris une fonction de pilotage;
- un arrangement de commande (12) électronique et paramétrable, configuré ou programmé pour commander l'arrangement fonctionnel en fonction d'un ensemble de donnés paramètres sauvegardé dans l'arrangement de commande en relation à la mise en marche ou l'arrêt de la fonction de travail ou de la fonction d'opération ou d'une fonction de travail ou d'opération respective ou/et en relation à une type de réalisation de la fonction de travail ou d'opération ou d'une fonction de travail ou d'opération respective; et
une mémoire de données (14) attachée de manière fixe dans le véhicule, séparée par rapport à l'arrangement de commande, et dans laquelle au moins un ensemble de données en rapport au véhicule est sauvegardé ou peut être sauvegardé, l'arrangement de commande étant configuré pour lire des données de l'ensemble de données en rapport au véhicule de la mémoire de données (14) dans un accès de lecture via une connexion de données (16) ou/et pour écrire dans un accès en écriture des données dans la mémoire de données (14) pour les enregistrer dans l'ensemble de données en rapport au véhicule ou pour actualiser l'ensemble de données en rapport au véhicule, **caractérisé par** la mémoire de données (14) étant installé de manière fixe dans un faisceau de câbles du véhicule ; et
en ce que l'arrangement de commande (12) est configuré ou programmé pour lire des données de la mémoire de données (14) et pour vérifier ces données utilisant les données de l'ensemble de donnés paramètres sauvegardé dans l'arrangement de commande selon au moins une première condition de vérification, et pour répondre à un non-respect de la condition de vérification en déclenchant au moins une fonction subséquente ou/et en bloquant ou limitant au moins une fonction de travail ou d'opération de l'arrangement de fonction.

2. Véhicule selon la revendication 1, **caractérisé en ce que** l'arrangement de commande (12) ou au moins un module d'arrangement de commande de ce dernier peut être enlevé du véhicule indépendamment de la mémoire de données (14) et peut être remplacé par un arrangement de commande d'échange ou un module d'arrangement de commande d'échange.

3. Véhicule selon les revendications 1 ou 2, **caractérisé en ce que** les données en rapport au véhicule sauvegardées dans la mémoire de données (14) comprennent l'ensemble de donnés paramètres ou un sous-ensemble de données de l'ensemble de donnés paramètres.

4. Véhicule selon une des revendications 1 à 3, **caractérisé en ce que** l'arrangement de commande (12) ou/et la mémoire de données (14) sont configurés de sorte que l'arrangement de commande peut accéder à la mémoire de données pour lire mais ne pas pour écrire.

5. Véhicule selon une des revendications 1 à 3, **caractérisé en ce que** l'arrangement de commande (12) ou/et la mémoire de données (14) sont configurés de sorte que l'arrangement de commande puisse accéder à une première section de mémoire de la mémoire de données pour lire mais ne pas pour écrire et puisse accéder à une deuxième section de mémoire de la mémoire de données pour lire et écrire.

6. Véhicule selon une des revendications 1 à 5, **caractérisé en ce que** la mémoire de données (14) ou la deuxième section de mémoire est configurée comme une mémoire morte programmable effaçable électriquement (EEPROM) ou **en ce que** la mémoire de données (14) ou la première section de mémoire est configurée comme mémoire morte (ROM) ou comme mémoire morte programmable effaçable (EPROM).

7. Véhicule selon une des revendications 1 à 6, **caractérisé en ce que** la connexion de données (16) comprend au moins une ligne de données électrique installée de manière fixe dans le véhicule, la connexion de données étant formée de préférence par un bus sériel à deux fils, en particulier un bus à deux fils sériel synchrone, en particulier ledit bus I²C ou TWI, ou de façon la plus préférée un bus sériel monofil.

8. Véhicule selon une des revendications 1 à 7, **caractérisé en ce que** l'arrangement de commande (12) est configuré ou programmé pour lire des données de la mémoire de données (14) et pour vérifier ces données utilisant les données de l'ensemble de donnés paramètres sauvegardé dans l'arrangement de commande selon au moins une deuxième condition de vérification, et pour répondre à un respect de la condition de vérification en autorisant ou supprimant une restriction d'au moins une fonction de travail ou d'opération de l'arrangement de fonction.

9. Méthode pour paramétrer un arrangement de commande en rapport à un véhicule selon une des revendications 1 à 8, **caractérisé en ce que** des données sont lues dans la mémoire de données (14) installée de manière fixe dans le véhicule et sont sauvegardées dans l'arrangement de commande (12) comme données paramètres d'un ensemble de donnés paramètres.

10. Méthode pour assurer une intégrité de paramètres ou/et une compatibilité de paramètres d'un ensemble de données paramètres sauvegardé dans l'arrangement de commande (12) en rapport à un véhicule selon une des revendications 1 à 8, **caractérisé en ce que** des données sont lues dans la mémoire de données (14) installée de manière fixe dans le véhicule et sont comparées à des données paramètres d'un ensemble de donnés paramètres sauvegardé dans l' l'arrangement de commande (12).

11. Méthode selon la revendication 10, **caractérisé en ce que** les données extraites de la mémoire de données (14) ou/et les données paramètres de l'ensemble de données paramètres sont vérifiées concernant l'intégrité des données.
